Europäisches Patentamt

European Patent Office

Office européen des brevets

(11) Veröffentlichungsnummer: **0 017 167**
A1

# EUROPÄISCHE PATENTANMELDUNG

(21) Anmeldenummer: 80101622.1

(22) Anmeldetag: 27.03.80

(51) Int. Cl.³: **B 23 K 9/02**

(30) Priorität: 28.03.79 US 24696

(43) Veröffentlichungstag der Anmeldung:
15.10.80 Patentblatt 80/21

(84) Benannte Vertragsstaaten:
AT CH DE FR GB IT NL SE

(71) Anmelder: **MESSER GRIESHEIM GMBH**
**Patentabteilung Hanauer Landstrasse 330**
**D-6000 Frankfurt/Main(DE)**

(72) Erfinder: **Balfanz, Fred**
**2008 Laura Lane**
**Waukesha, Wisconsin(US)**

(54) **Programmierte Schweissmaschine mit kontinuierlicher Programmübersteuerung.**

(57) Eine Schweißmaschine enthält eine Steuervorrichtung (8, 9, 14, 33) um einen Schweißkopf (21) in bezug auf die horizontale X- and Y-Hauptachse zu steuern und um den Schweißkopf (21) um eine vertikale C-Achse zu drehen. Der Schweißkopf (21) und ein Sensor (25) sind an einem drehbaren Rotor (29) befestigt. Ein Sinus-Cosinus-Zerleger (61) ist an dem Rotor (29) so angebracht, daß dessen Welle in das Rotor-Getriebe (31) eingreift. Abweichungen der Schweißfuge von der programmierten Strecke werden vom Sensor (25) erfaßt, der seinerseits bewirkt, daß der Zerleger (61) einen Schlitten-Mechanismus antreibt. Dieser bewirkt ein Verschieben des Schweißkopfes in Abweichungs-Achsen $X_d$ und $Y_d$, so daß sich der Schweißkopf aus seiner programmierten Strecke zur gewünschten richtigen, korrigierten Strecke bewegt. Diese Programm-Übersteuerungs-Korrektur ist vom Programm unabhängig und hat keinen Einfluß auf das Programm.

./...

Fig. 1

- 1 -

MESSER GRIESHEIM GMBH                    TMG   1225

Kennwort:  Programm Korrektur-Schweißfuge

Erfinder:  B a l f a n z              Ordner: II

## Programmierte Schweißmaschine mit kontinuierlicher Programmübersteuerung

Diese Erfindung bezieht sich auf eine programmierte Schweißmaschine mit kontinuierlicher Programmübersteuerung. Schweißmaschinen, denen eine Programmiervorrichtung zugeordnet ist, um den Schweißkopf entlang einer eingestellten Strecke zu führen, werden seit langem eingesetzt. Die Programmier-Vorrichtung kann mit Vorrichtungen wie numerische Steuerung (N/C), Schablonen mit Abtast-Vorrichtungen usw. ausgerüstet werden. Die Schweißmaschinen sind eingesetzt worden, um große Teile wie "booms" (boom = Ausleger, Spiere, Leitwerkträger etc.), C-Rahmen (Sondenbügel), Hubhebel usw. herzustellen, zu denen nicht nur gerade sondern auch gebogene Teile gehören können.

Bei der Herstellung von großen Teilen, wie den vorher beschriebenen, wurden sie häufig aus einer Zusammenstellung von zwei oder mehreren Einzelteilen gebildet, die ursprünglich durch Brennschneiden mit Plasma- oder ähnlichen Brennern von einem großen Werkstück gebildet worden sind. Die einzelnen Teile werden dann geheftet, wenn das erwünscht ist und fest nebeneinander positioniert, um eine Schweißfuge oder eine Schweißnaht zu bilden. Ein Schweißkopf wird dann entlang der Fuge bewegt, um eine Schweißraupe zu bilden, die die Teile miteinander verbindet.

Außerdem sind Konturen-Vorrichtungen bereits bekannt, die einen Querträger oder eine Brücke haben, der die eine Traverse oder X-Achse bildet, die sich auf Schienen oder ähnlichem bewegt, die eine Längs- oder Y-Achse bilden. Ein Wagen zur Bewegung über die Brücke trägt ein Metallbearbeitungs-Werkzeug, wie einen Schneidbrenner oder ähnliches.

Ferner ist das System bekannt, bei dem ein Abtastelement angebracht ist als "Sucher" (Probe) neben dem Schweißeinsatz, um die Lage der Kante einer Fuge oder einer Naht zum Schweißen abzutasten und um einen Gleit-Mechanismus zu erstellen, um die Position des Schweißkopfes entsprechend der betreffenden Positionierung der "Probe" einzustellen.

Seit langem bestand der Wunsch, eine Schweißmaschine zu schaffen, die effektiv universell ist, d.h., eine Schweißmaschine, die fast jede gewünschte Kontur exakt schweißen kann, ohne daß größere Nachstellungen im Mechanismus erforderlich sind.

Soweit es dem Erfinder bekannt ist, ist das bisher auch nicht mit vorprogrammierten Steuerungen möglich gewesen. Eines der größten Probleme bestand nämlich darin, daß, obwohl fast jede Kontur mit einer N/N- oder mit einer Abtast-Vorrichtung programmiert werden kann, die Fuge für das Schweißmaterial im allgemeinen nicht genau der gewünschten Kontur entspricht. Dieses "Nichtübereinstimmen" kann nicht im voraus angegeben werden. Es können da mehrere Faktoren zusammen-

- 3 -

kommen, von denen einer der wichtigsten darin besteht, daß die Kanten der zu verbindenden Teile häufig nicht von vornherein mit sehr enger Toleranz brenngeschnitten oder anders gebildet werden können. Die Toleranz beim Brennschneiden kann 1/4 inch oder mehr betragen. Diese große Toleranz kann es erschweren, eine definitive Schweißnaht herzustellen, die strukturell über die gesamte Länge hinweg einwandfrei ist, auch nicht mit einer programmierten Schweißkopf-Kontur-Steuerung. Ein anderes Problem ergibt sich dadurch, daß beim Heftschweißen von Teilen, die zu schweißen sind, diesen Wärme zugeführt wird, was einen Verzug der Teile bewirkt.

Als Ergebnis der vorgenannten Probleme bestand die Praxis bisher darin, jeweils eine spezielle Schweißmaschine für eine spezielle Schweißung zu bauen, um das Toleranz-Problem bei der Ausführung jeder einzelnen Maschine separat zu lösen.

Es ist die Aufgabe der vorstehenden Erfindung, eine programmierte Schweißmaschine zu entwickeln, die exakt große Teile verbinden kann, und zwar in jeder beliebigen Form, und zwar ohne größere Nachstellungen der Maschine, wenn Teile verschiedener Formen geschweißt werden.

Es ist eine weitere Aufgabe der Erfindung, eine programmierte Schweißmaschine zu entwickeln, die automatisch Abweichungen in den Konturen der Schweißungen kompensieren kann, wenn viele Teile derselben allgemeinen Form oder wenn Teile verschiedener Form geschweißt werden.

Es ist weiter Aufgabe der Erfindung, eine programmierte Schweißmaschine zu bauen, bei der der Schweißkopf entlang einer "programmierten Strecke" geführt wird, die der gewünschten allgemeinen Schweißkontur entspricht und bei der

- 4 -

Abweichungen in der Schweißfuge zwischen den Teilen von dieser Kontur ausgeglichen werden, wobei der Schweißkopf an der "richtigen Strecke" entlang geführt wird, die von den Teilen selber bestimmt wird. Die besagte "richtige Strecke" unterscheidet sich dabei wenigstens zeitweise von der "programmierten Strecke".

Eine weitere Aufgabe dieser Erfindung besteht darin, kontinuierlich diese Kontur-Abweichungen derart auszugleichen, daß dadurch die eigentliche Programm-Steuerung nicht beeinträchtigt oder geändert werden muß, so daß die Schweißung dort angebracht wird, wo sie tatsächlich zu erfolgen hat und nicht dort, wo sie programmiert war.

Die Erfindung wird für den Einsatz in Verbindung mit einer Schweißmaschine in Betracht gezogen, bei der die Haupt-X- und Y-Achse definiert sind. Eine Vorrichtung wird unter dem Wagen der Schweißmaschine angebracht, um ein Teil zu plazieren, zu dem ein Schweißkopf und ein Schweißfugen-Sensor gehören. Diese Vorrichtung umfaßt einen Rotor, der eine Vertikal-C-Achse bestimmt, um die die Spitzen des Schweißkopfes und des Sensors gedreht werden können.

Eine Programmier-Vorrichtung, wie eine numerische Steuerung oder ein Abtastkopf wird in der üblichen Art programmiert, um die Maschinenteile zu bewegen und somit den Schweißeinsatz und den Sensor in Bezug auf die Haupt-X- und Y-Achse. Sie kann ferner benutzt werden, um den Rotor zu drehen, so daß sich die erwähnte Vorrichtung um die C-Achse dreht. Das programmierte Drehen der Vorrichtung bezweckt, den Sensor vor dem Schweißeinsatz entlang der Schweißfuge in einer Position zu halten, ganz gleich, welche diesbezügliche Kontur vorhanden ist. Eine Rückführung von den Haupt-Antriebs-Motoren für die Maschine und den Rotor zu der programmierten Vorrichtung bewirken, daß der Schweißkopf und der Sensor sich dort befinden, wo sie sein müssen. Die Erfindung bezweckt allgemein, die Programmier-Vorrichtung derart zu übersteuern, daß der Schweißeinsatz ständig von der programmierten Strecke zu einer korrigierten Strecke bewegt wird (durch Abweichungen in der Schweißfuge bestimmt), und zwar ohne das Programm zu beeinträchtigen.

Eine Schlittenvorrichtung wird zwischen Maschinenwagen und Schweißeinsatz und Sensor angeschlossen. Die Schlittenvorrichtung bestimmt eine Vielzahl von Ablenkungsachsen wie $X_d$ und $Y_d$ und wird von Motoren angetrieben, und zwar einem Motor für jede Abweichungsachse, um die Übersetzung des Schweißkopfes von der programmierten Strecke zur gewünschten "richtigen Strecke" zu bewirken, der Abweichung in der Schweißfuge entsprechend.

Zur Steuerung der Schlittenmotore wird die Welle eines Sinus-Cosinus-Zerlegers 1 : 1 an ein Getriebe angeschlossen, das zum Rotor gehört. Die Stator-Wicklungen des Zerlegers sind an die Schlitten-Motore angeschlossen und reagieren auf eine Spannung, die dem Zerleger-Rotor oder der "Wellen-Wicklung" zugeführt wird. Das Stator-Signal reagiert auf die abgelenkte Position des Sensors in der Schweißfuge in Bezug auf die programmierte Schweißeinsatz-Position und treibt je nach Abweichung die Gleitmotoren an, um eine Korrektur in der Schweißkopf-Lage zu bewirken.

Die Drehposition der Zerleger-Welle und damit die Rotor-Spule (Wicklung) in bezug auf die Stator-Wicklungen, bewirkt eine Einstellung des Zerlegers, die das Verhältnis der betreffenden Korrektur-Antriebs-Signale bestimmt, die auf die Schlittenmotore zu übertragen sind. Die Drehlage der Zerleger-Welle reagiert ihrerseits auf die Dreh-Position des Rotors durch die Getriebe-Verbindung.

Wenn die Schweißmaschine in Betrieb gesetzt wird, treibt die Programmier-Vorrichtung den Schweißkopf eine gerade oder gebogen programmierte Strecke an, die im allgemeinen auch die "richtige Strecke" ist, um die Schweißung in einer Fuge zwischen zwei zu verbindenden Teilen vorzunehmen. Gleichzeitig kann die Programmier-Vorrichtung den Rotor, wenn es nötig ist, um die vertikale C-Achse drehen, um den Sensor vor dem Schweißkopf zu halten. Abweichungen von der programmierten Strecke in eine Richtung, die senkrecht dazu verläuft, werden vom Sensor abgetastet, der über den Zerleger Befehle an die Schlittenmotore gibt, den Schweißkopf von der "programmierten Strecke" zu bewegen und entlang der $X_d$- und/bzw. $Y_d$-Achse zur effektiv gewünschten "richtigen Strecke".

Obgleich der Schweißkopf veranlaßt wird, von der programmierten Strecke abzuweichen, wenn das erforderlich ist, wird die Programmier-Vorrichtung dadurch nicht berührt und kann eingesetzt werden, um andere identische Teile zu schweißen, die verschiedene Toleranzen haben können.

Die Zeichnungen in der Anlage stellen die Ausführung dar, die z.Z. vom Erfinder für die beste gehalten wird, um die Erfindung zu realisieren.

In den Zeichnungen veranschaulicht

Fig. 1    eine perspektivische schematische Ansicht einer Schweißmaschine nach der Erfindung.

Fig. 2    Eine vergrößerte Teil-Vorder-Ansicht des Maschinenwagens,

Fig. 3    einen Längsschnitt        3 - - 3 in  Fig. 2
Fig. 4    einen Querschnitt         4 - - 4 in  Fig. 2
Fig. 5    eine elektromechan. Darstellung mit dem System zum Feststellen und Korrigieren von Abweichungen, wenn die zu schweißende Naht parallel zur Y-Achse der Maschine liegt.

Fig. 6    eine Ansicht entsprechend Fig. 5, wenn die zu
schweißende Naht parallel zur X-Achse der Maschine liegt,

Fig. 7    eine Ansicht entsprechend Fig. 5 und 6, wenn
die zu schweißende Naht eine gerade Linie ist,
die unter einen Winkel    zur X- u. Y-Achse
der Maschine verläuft,

Fig. 8    eine Ansicht entsprechend Fig. 5 bis 7, wenn die
zu schweißende Naht gekrümmt ist,

Fig. 9    ein schematisches elektrisches Schaltschema des
Abtast- und Korrektur-Systems.

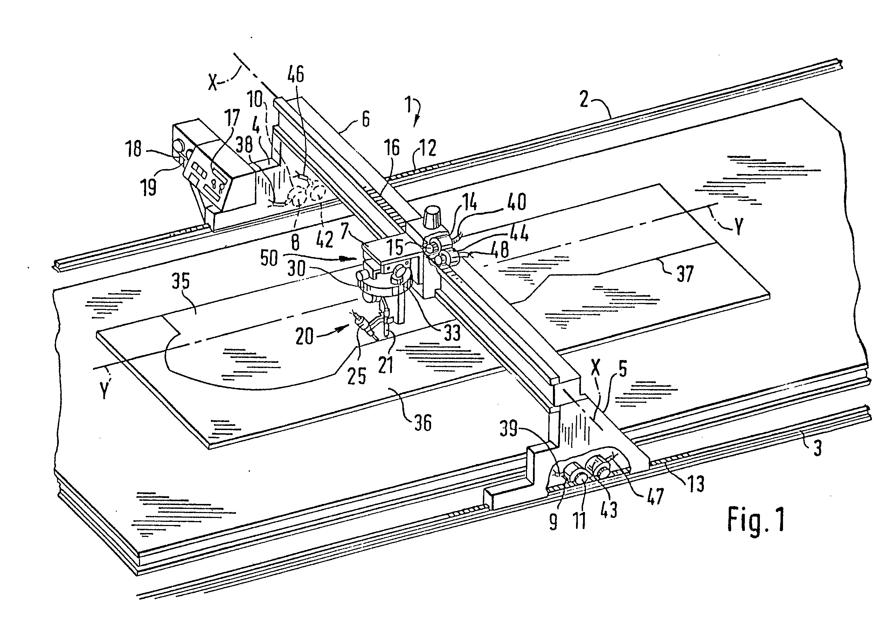

Die bevorzugte Darstellung enthält die Teile der Erfindung
und ist allgemein in den Figuren 1 - 3 dargestellt. Darin
ist eine Schweißmaschine 1 derart konstruiert, daß sie
auf ein paar Längs-Parallel-Schienen 2 u. 3 gesetzt werden
kann, die auf dem Boden befestigt sind. Die Support Portale
4 und 5 sind zur Bewegung entlang den betreffenden Schienen
angebracht und tragen die Enden eines Quer-Supportes oder
einer Brücke 6, die sich über die Schweißfläche erstreckt.
Ein Wagen 7 ist entsprechend zur Bewegung an der Brücke 6
entlang angeordnet.

Die Brücke 6 bildet eine Haupt-Horizontal-X-Achse, während
die Schienen 2 und 3 parallel zu einer Haupt-Horizontal-Y-
Achse liegen.
Die Brücke 6 wird in der Y-Achsen-Richtung angetrieben, und
zwar von einem entsprechenden Bewegungsteil wie Motore 8
und 9, die in den Portalen 4 und 5 angebracht sind, die
Ritzel 10 und 11 haben und in Zahnstangen 12 und 13 kämmen,
die sich an den Schienen 2 und 3 befinden. Entsprechend wird
der Wagen 7 an der Brücke 6 in X-Achsen-Richtung bewegt, und
zwar durch ein geeignetes Antriebsteil, wie ein Motor 14 auf
dem Wagen, der ein Ritzel 15 hat, das in eine Zahnstange 16 eingreift, die sich auf der Brücke befindet. Eine Programmier-Vorrichtung ist vorgesehen, um den Betrieb der Motore 8, 9 und 14 zu steuern, sowie andere Teile, die noch zu beschreiben sind. Eine derartige Programmier-Vorrichtung hat teilweise den Zweck, den Wagen 7 anzutreiben, sowie den angeschlossenen Schweißkopf, der noch zu beschreiben ist, und zwar entlang einer gewünschten Strecke in bezug auf die X- und/oder Y-Achse. Die Vorrichtung kann irgendeiner gewünschten Type entsprechen, beispielsweise solchen, die in den US-Patenten 3 171 012, 3 434 212, 3 924 094, 3 997 757, 4 012 027, 4 014 495 abgebildet sind. Die Vorrichtung kann beispielsweise einen Taster enthalten, der einer Schablonen- (Vorlage-) Kontur folgt und die Maschine derart antreibt, daß die Kontur reproduziert wird.

Mit dem Einsatz der numerischen Steuerung wird angenommen, daß es sich dabei derzeit um das bevorzugte Programm-System handelt. Wie in Fig. 1 schematisch dargestellt, wird eine Eingabesteuereinheit 17 benutzt, um die numerische Steuerung zu programmieren und zu betreiben, die Papier- oder Magnetband 18 enthält, das durch den üblichen Aufnahme-Teil 19 läuft, um eine Leistung zu realisieren, um die vorgenannten Motore mit gewünschter Geschwindigkeit und Richtung anzutreiben, um eine programmierte Strecke für den Wagen zu schaffen.

Wenn man sich auf Fig. 1 - 3 bezieht, dann sieht man, daß der Wagen 7 eine Schweißvorrichtung 20 aufnehmen kann, mit einem vertikalen Schweißkopf 21 und einer Spitze 22, die z.B. mit Schweißdraht 23 von einer Spule 24 versorgt werden kann. Die Vorrichtung 20 enthält auch einen Sensor, der bei dieser Darstellung eine Sonde (Sucher/Fühler) 25 enthält, die eine Spitze 26 hat und der winkelförmig (Bügel 27) am Einsatz 21 montiert ist. In dieser Darstellung werden Schweißkopf 21 und Sonde 25 fest durch eine Halterung 28 einer Rotor-Ein-

- 9 -

heit 29 gehalten, die drehbar um eine vertikale Achse gelagert ist, hier als C-Achse definiert, die senkrecht zu den Achsen Y und X steht.

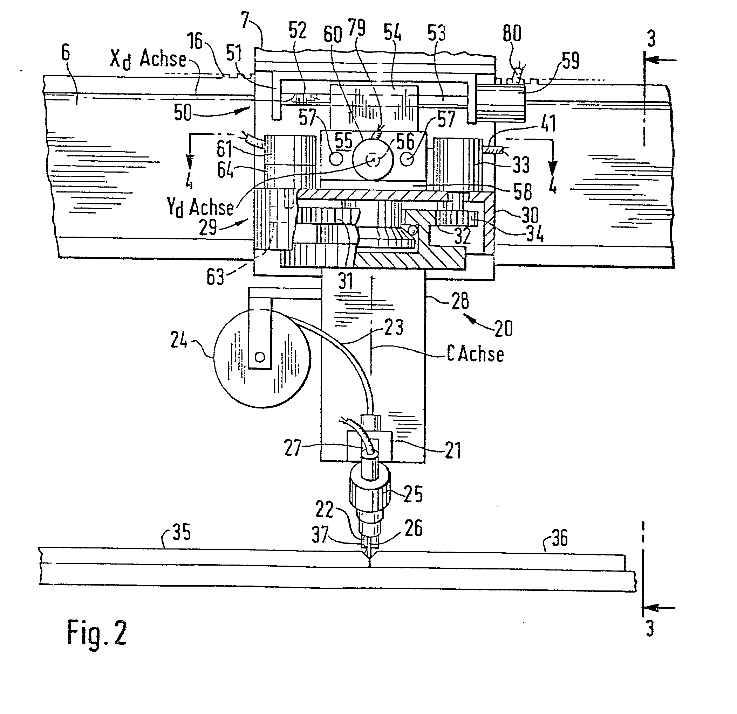

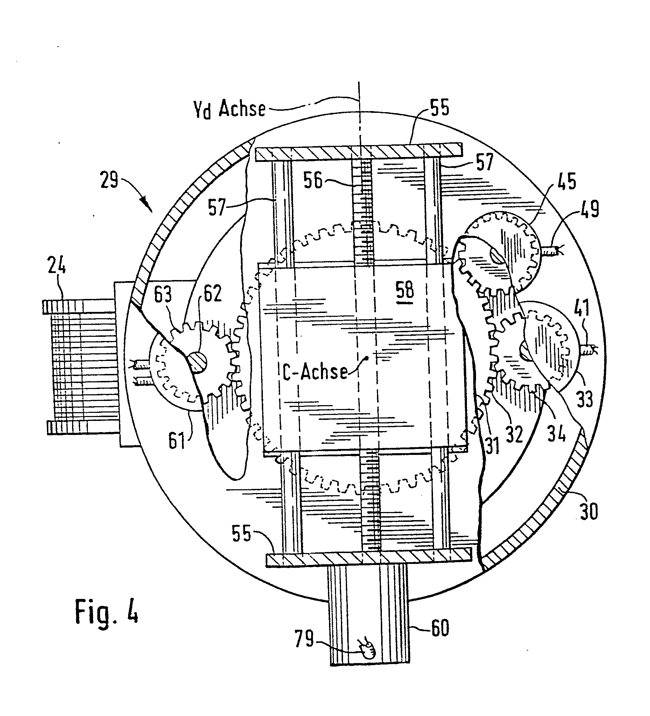

Gemäß Fig. 2 - 4 ist die Rotor-Einheit 29 unterhalb des Wagens 7 vorgesehen, enthält ein festes Gehäuse 30 und ein Getriebe 31 mit Zähnen 32 und ist um die C-Achse drehbar gelagert.

Der drehbare Antrieb für das Getriebe 31 umfaßt bei dieser Darstellung einen Antriebsteil wie einen Motor 33, der fest auf dem Gehäuse 30 angebracht ist und der ein Zahnrad 34 hat, dessen Zähne 32 mit dem Getriebe 31 kämmen. Motor 33 ist ebenfalls an die Programmiervorrichtung angeschlossen, wodurch der Motor angetrieben wird. Dadurch wird das Motor-Getriebe 31 gedreht.

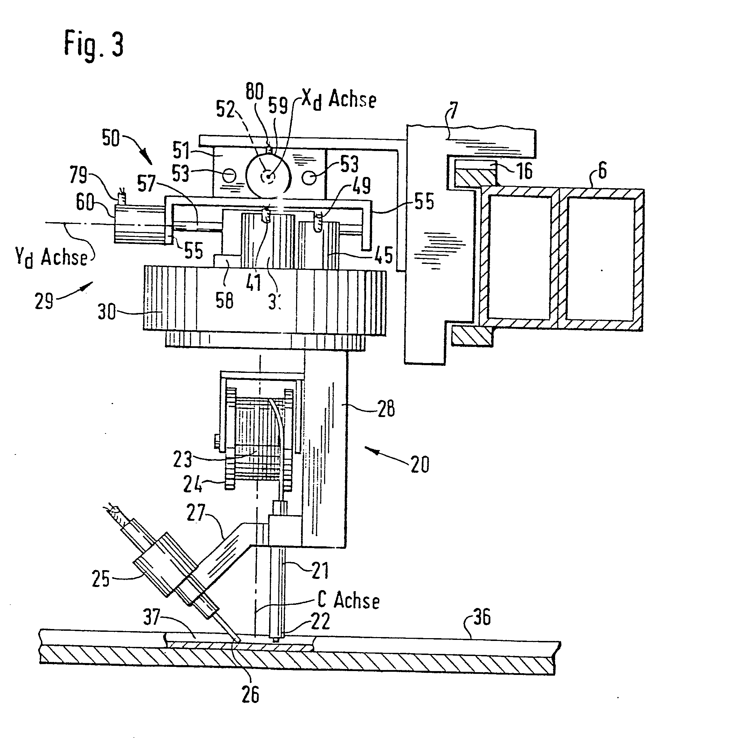

Wie in Fig. 1 - 3 dargestellt, befinden sich Schweißkopf 21 und Sonde 25 mit ihren Spitzen 22 und 26 in einer Lage, die im allgemeinen horizontal ist. Sie sind selbstverständlich so ausgelegt, daß sie zusammenarbeiten, um zwei Metallteile 35 und 36 zu verbinden, die möglicherweise zusammengeheftet worden sind, jedoch irgendwie in eine feste horizontale Lage unter der Brücke 6 gebracht worden sind. Die Werkstücke 35 und 36 sind so positioniert, daß sie eine Naht oder eine Fuge 37 bilden können, um während der Schweißung das Schweißmaterial, wie Draht 23, aufzunehmen. Dabei wird gewünscht, daß die Sondenspitze 26 vor der Spitze 22 des Schweißkopfes 25 in der Fuge anliegt, so daß diese Sondenspitze 26 als Sensor wirken kann, bevor die Schweißkopfspitze 22 zur selben Fugenstelle kommt. Die Spitzen 22, 26 sind voneinander im Abstand positioniert, wobei die C-Achse etwa in der Abstandsmitte hindurchgeht (siehe Figur 3). Zuweilen kann die C-Achse vorzugsweise nicht durch die Abstandsmitte zwischen den Spitzen 22 und 26 laufen und durch eine der Spitzen 22/26 selber hindurchgehen.

Motore 8, 9, 14 und 33 sind an die numerische Steuerung 17 über die Leitungen 38 - 41 angeschlossen, so daß die programmierten Signale die Motoren wie üblich antreiben. Die numerische Steuerung ist programmiert, um den Schweißkopf 21 entlang der geradlinigen als auch gebogenen Strecke zu bewegen Das ist die programmierte Strecke. Bei einem geraden, parallel zu einem der Hauptachsen X oder Y liegenden Streckenabschnitt, bewegt die numerische Steuerung nicht nur die Brücke 6 oder den Wagen 7 entlang dieser Hauptachse, sondern dreht auch das Rotor-Getriebe 31 in eine feste Position, so daß die Schweißkopfspitze 22 und die Sondenspitze 26 parallel zur Strecke und zur Achse liegen und die Spitze 26 vorausläuft. Wenn die Fuge bzw. die programmierte Strecke eine winkelförmige Linie mit X- und Y-Komponenten bilden, bewirkt das Programm die Bewegung von Brücke 6 und von Wagen 7 und dreht ebenfalls den Zahnkranz 31 in eine feste Position, so daß die Spitzen 22 und 26 parallel zur winkelförmigen Linie stehen. Wenn jedoch die Fuge 37 und die Programmier-Strecke gebogen sind (mit sich verändernden X- und Y-Komponenten) wird durch das Programm nicht nur Brücke 6 und Wagen 7 bewegt, sondern auch das Getriebe 31 kontinuierlich gedreht, um die Spitzen 22 und 26 stets in Richtung der Tangente des Kurvenverlaufes zu halten.

Wie es bei numerischen Steuerungen etc. üblich ist, wird ein Rückführungs-Mechanismus zwischen Maschine und Verdrahtung/ Schaltungstechnik innerhalb der numerischen Steuerung 17 vorgesehen, um anzuzeigen, daß die Schweißkopfspitze 22 und die Sondenspitze 26 sich auch dort befinden, wo sie zu einem bestimmten Programmzeitpunkt sein müssen. Die Figuren 1-4 zeigen Rückführungs-Vorrichtungen 42-45, mit einem Zerleger, einem Synchro-Empfänger, einem Impuls-Codierer oder dergl., welche mit Zahnstangen 12, 13 und 16 sowie mit einem Zahnkranz 31 verbunden sind. Die relative Information über die Position, die von den Teilen 42-45 abgetastet wird, wird zur numerischen Steuerung 17a zurückgegeben, und zwar durch die Leitungen 46-49. Wie vorher erwähnt, werden keine Schweißungen von höchster Qualität erzielt, wenn der Schweißkopf 21 nur entsprechend dem Programm entlang der Fuge 37 geführt wird. Das ist darauf zurückzuführen, daß die Teile, aus denen die Schweißung bestehen soll, brenngeschnitten sein können, so daß die Kanten-Toleranzen sehr groß sind.

Diese Schweißmaschine ist so ausgelegt, daß Abweichungen der tatsächlichen Fuge von der programmierten Strecke festgestellt werden können, um das Programm zu übersteuern und um den Schweißeinsatz in eine korrigierte Lage zu bringen, wenn dies erforderlich sein sollte, und zwar ohne das Grundprogramm zu beeinträchtigen.

Zu diesem Zweck wird die Sonde 25 an den Mechanismus derart angeschlossen, daß, unabhängig vom Hauptprogramm, Schweißvorrichtung 20 und Rotor-Einheit 29 veranlaßt werden, eine Korrektur-Strecke zu durchlaufen.

Wie am besten der Darstellung von Fig. 1-4 zu entnehmen ist, wird eine Schlittenvorrichtung (Höhenverstellung, Schlitten etc.) 50 zwischen Wagen 7 und Rotor 29 angebracht. Die Schlittenvorrichtung 50 enthält einen oberen Schlittenteil $X_d$, der an dem Wagen 7 aufgehängt ist und der eine Halterung 51 mit einer Gewindeführungs-Schraube oder Welle 52 aufweist. Die Welle 52 verläuft parallel zur Brücke 6 und der Maschinen-Haupt-X-Achse und wird eingesetzt, um Fugen-Abweichungen senkrecht zur Haupt-Y-Achse zu bestimmen. Diese Achse wird $X_d$-Achse genannt. Ein Paar Führungsstangen sind parallel zur Gewindewelle 52 in einem Block 54 vorgesehen, der mit der Welle 52 durch Gewinde verbunden ist. Die Schlittenvorrichtung 50 umfaßt einen unteren Schlittenteil $Y_d$, der rechtwinklig zum oberen Schlittenteil angeordnet ist und eine Halterung 55 mit einer Führungsschraube mit Gewinde oder Welle 56 aufweist. Die Welle 56 verläuft parallel zu den Schienen 2 und 3 und zur Maschinen-Haupt-X-Achse und wird benutzt, um Fugen-Abweichungen senkrecht zur Haupt-X-Achse festzustellen. Diese Achse wird $Y_d$-Achse genannt. Führungsstangen 57 verlaufen parallel zur Welle 56 in einem Block 58, der mit der Welle 56 durch Gewinde verbunden ist und an dem das Rotor-Gehäuse 30 angebracht ist.

Bewegungsteile sind vorgesehen, damit Welle 52 den Antriebsblock 54 dreht und damit alles, was daran befestigt, einschließlich des Schweißkopfes 21 und der Sonde 25, entlang der $X_d$-Achse bewegt wird. Zu diesem Zweck wird ein Motor 59 auf der Halterung 51 angebracht, um die Welle 52 zu drehen. In bezug auf die $Y_d$-Achse ist zu bemerken, daß ein Motor 60 auf der Halterung 55 montiert wird, um die Welle 56 zu drehen.

Die Motore 59/60 werden entsprechend den von der Sonde 25 beim fortschreitenden Schweißen festgestellten Abweichungen der Fuge 37 von der programmierten Strecke separat oder zusammen angetrieben. Zu diesem Zweck werden Motore und Sonde elektromechanisch über den Zerleger 61 verbunden, welcher fest auf dem Rotor-Gehäuse 30 sitzt. Der Zerleger 61 hat eine drehbare Welle 62, an deren unterem Ende ein Zahnrad 63 vorgesehen ist, das in das Rotor-Getriebe 31 eingreift. Es ist wichtig, daß die Zerleger-Welle 62 und das Rotor-Getriebe 31 sich im Verhältnis von 1 : 1 drehen, d.h. bei jeder Drehung des Getriebes 31 von 360° dreht sich die Welle 62 ebenfalls um 360°. Dazu kann ein Getriebe 64 zwischen Zerleger 61 und Getriebe 31 angebracht werden, mit dem Zahnrad 63 am Getriebeausgang.

Beim Zerleger 61 handelt es sich um einen an sich sehr bekannten Sinus-Cosinus-Synchro mit Einphasenrotor und Zweiphasenstator. Die jeweilige Position der Zerleger-Welle 62 wird benutzt, um die elektrische Leistung in $X_d$ und $Y_d$-Koordinaten-Spannungs-Signale aufzuteilen und die Motore 59 und 60 entsprechend anzutreiben.

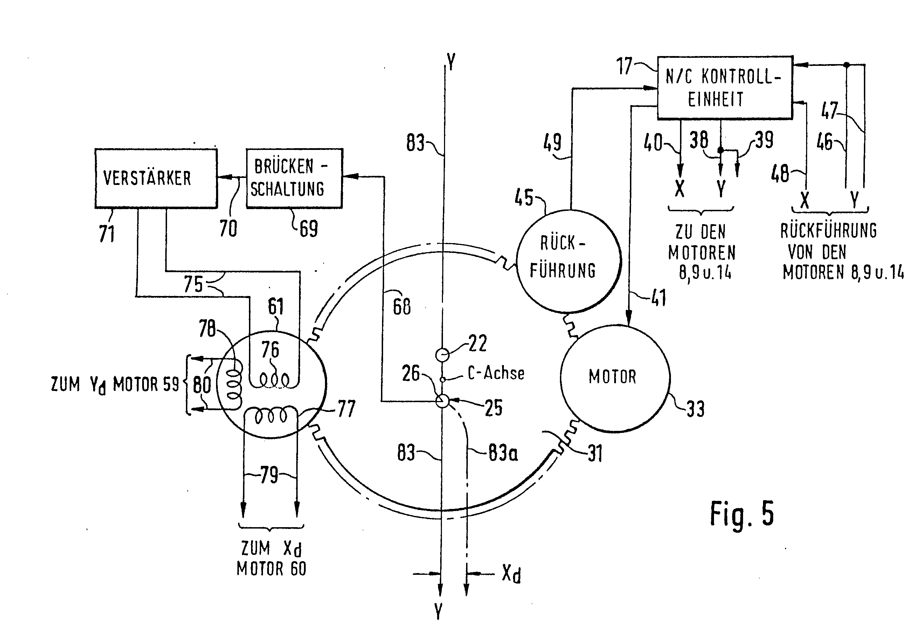

Nach Figuren 5 - 9 weist die Sonde ein Gehäuse 65 auf, in dem die Spitze 26 mittels einer Feder 66 in einer Null-Lage gehalten ist. Die Position von der Spitze 26 ist derart, daß der Sondenausgang über eine Leitung 68 zu einer Brückenschaltung 69 geführt ist, die ihrerseits durch eine Leitung 70 mit einem Verstärker 71 verbunden ist. Die Brückenschaltung 69 umfaßt einen Netz-Transformator 72 und ein Paar Drehwiderstände 73/74, die parallel geschaltet sind. Wenn die Drehwiderstände ausgeglichen sind wird dem Verstärker 71 kein Signal zugeführt. Wenn jedoch eine Abweichung in der Fuge 37 vorkommt, wird die Sonde 25, die den Widerstand 74 enthält, bei den Widerständen und somit bei der Brückenschaltung eine Unausgeglichenheit hervorrufen, wodurch ein Signal an Verstärker 71 gegeben wird.

Der Verstärker 71 ist über Leitungen 75 an die Rotor-Wicklung 76 von der Welle 62 des Sinus-Cosinus-Zerlegers 61 angeschlossen. Die betreffenden $Y_d$- und $X_d$-Stator-Wicklungen 77 und 78 des Zerlegers 61 sind unter 90° zueinander positioniert und über Leitungen 79 und 80 mit dem $Y_d$- und dem $X_d$-Motor 59 verbunden. Wenn es gewünscht wird, können geeignete Servo-Verstärker 81 und 82 in die Leitungen 79 und 80 geschaltet werden.

Fig. 5 - 8 der Zeichnungen stellen den Betrieb der Erfindung in einer Reihe von verschiedenen Schweißfugen dar, von denen alle ebenfalls auf dem Werkstück von Fig. 1 gezeigt werden.

Zunächst wenden wir uns Fig. 5 zu. Die numerische Steuerung 17 ist programmiert, um eine Naht in einer Fuge zu schweißen, die im allgemeinen parallel zur Haupt-Y-Achse der Maschine verläuft. Die programmierte Strecke, die mit 83 bezeichnet ist, verläuft genau parallel zur Y-Achse und im allgemeinen entlang der Fuge 37. Die Einheit 17 bewirkt zunächst, daß der Motor 33 das Rotor-Getriebe 31 um die C-Achse bewegt, so daß die Sondenspitze 26, die C-Achse und die Schweißkopfspitze 22 sich ebenfalls parallel zur Y-Achse befinden, wobei die Sondenspitze 26 vorausläuft. Diese Information wird zur Steuerung 17 über die Rückführungs-Vorrichtung 45 gegeben. Durch das Drehen des Rotor-Getriebes 31 dreht sich auch die Zerleger-Welle 62, so daß die Rotor-Wicklung 76 parallel zur Stator-Wicklung 77 und 90° zur Stator-Wicklung 78 liegt. Zumindest am Anfang ist die Sensorspitze genau dem Programm entsprechend positioniert, so daß die Brücke 69 ausgeglichen ist und der Verstärker 71 kein Ausgangs-Spannungs-Signal hat. Daher gibt der Zerleger 61 keine elektrische Leistung an die Motore 59 und 60. Die Einheit 17 bewirkt dann, daß sich die Brücke 6 mittels der Motore 8 und 9 entlang der Y-Achse bewegt, ohne daß dabei der Wagen 7 bewegt wird.

Diese Information wird ebenfalls zur Einheit 17 über die Rückführungen 42/43 zurückgegeben, wodurch die Steuerung informiert wird, daß die programmierte Strecke 83 eingehalten ist.

Es kann jedoch, wie bereits erklärt, vorkommen, daß die Fuge 37 nicht genau entsprechend der programmierten Strecke 83 verläuft. Da der Wagen 7 und die Schweißvorrichtung 20 die programmierte Strecke entlang geführt werden, wird die Sondenspitze 26, die der Fuge folgt, Abweichungen der Fuge von der programmierten Strecke feststellen. Diese Abweichungen bewirken, daß die Sondenspitze 26 sich senkrecht zur Strecke 83 und zur Y-Achse und somit parallel zur X-Achse bewegt. Die Fugenabweichung ist in Fig. 5 als Phantom-Linie 83a dargestellt und bestimmt einen $X_d$-Fehler, der zu korrigieren ist, damit richtig geschweißt werden kann.

Die vorgenannte Konstruktion ist so ausgebildet, daß, wenn die Sondenspitze 26 der Fugenabweichung folgt, die Brückschaltungen 69 verstimmt wird, so daß dann der Verstärker 71 ein Spannungs-Signal der Zerleger-Rotor-Wicklung 76 zuführt, das proportional zur Abweichung ist. Die eingestellte Lage der Wicklung 76 bewirkt, daß ein Spannungs-Signal in der Stator-Wicklung 77 für

den $Y_d$-Schlittenmotor 60 induziert wird; in der Stator-Wicklung 78 für den $X_d$-Schlittenmotor 59 wird jedoch kein Signal induziert. Damit wird nur der Motor 60 aktiviert und die Welle 56 gedreht. Dadurch bewegen sich Rotor 29, der Schweißkopf 21, die Sonde 25 und die C-Achse entlang der $Y_d$-Achse, und zwar der Abweichung entsprechend. Die Schweißkopfspitze 22 wird somit gegenüber der programmierten Strecke 83 verschoben, und zwar zur abgewichenen, effektiven und gewünschten Strecke 83a.

Da keine Rückführung vom Korrektur-Mechanismus zur Einheit 17 erfolgt, wird das Programm nicht verändert, selbst wenn es, wie beschrieben, übersteuert worden ist.

Abweichungen in der Fuge werden kontinuierlich von der Sondenspitze 26 erfaßt wenn sie entlang der Fuge geführt wird und es werden deshalb auch kontinuierliche Korrekturen vorgenommen.

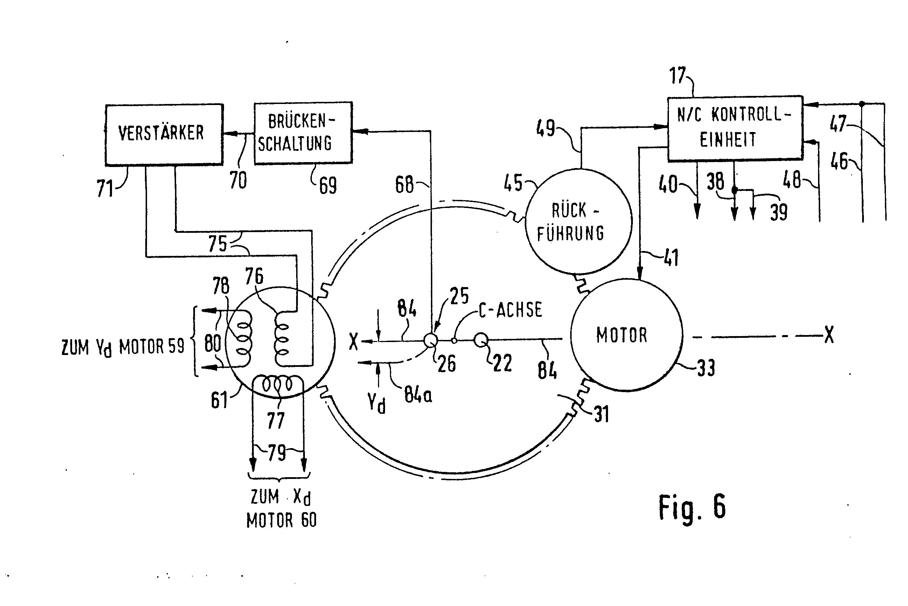

Die Figur 6 entspricht im wesentlichen der Figur 5, abgesehen davon, daß hierbei die Steuerung 17 programmiert ist, um eine Schweißnaht in einer Fuge auszuführen, die im allgemeinen parallel zur Haupt-X-Achse der Maschine verläuft. Die programmierte Strecke ist mit 84 bezeichnet. Die Steuerung 17 veranlaßt den Motor 33 und das Rotor-Getriebe 31, um die C-Achse zu drehen, so daß die Spitzen 22 und 26 und die C-Achse nunmehr in einer Linie parallel zur X-Achse angeordnet sind. Die Zerlegerwelle 62 wird auf Befehl der Steuerung 17 so in eine Lage gedreht, daß sich die Rotor-Wicklung 76 gegenüber der Stator-Wicklung 78 und ferner in einem Winkel von 90° zur Stator-Wicklung befindet. Durch die Steuerung 17 wird der Wagen 7 entlang der X-Achse bewegt, und zwar ohne eine Bewegung der Brücke 4.

Abweichungen 84a in der Fuge von der programmierten Strecke 84 werden von der Sensorspitze 26 erfaßt, die sich dann senkrecht zur Strecke 84 bewegt. Die Brückenschaltung 69 wird verstimmt und bewirkt, daß die Verstärker 71 der Rotor-Wicklung 76 ein Signal zuführt. Dadurch wird eine Spannung in der Stator-Wicklung 78 erzeugt, damit nur der $X_d$-Schlittenmotor 59 arbeitet und der Rotor mit den betreffenden Teilen einschließlich dem Schweißkopf 21 entlang der $X_d$-Achse entsprechend der Abweichung bewegt wird.

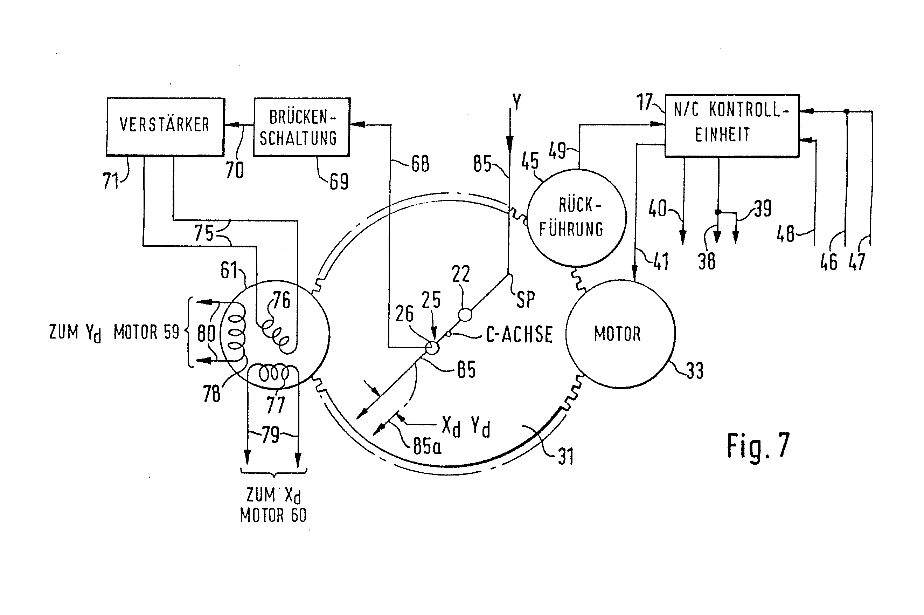

In der Figur 7 verläuft die zu schweißende Fuge zunächst wie in Figur 5, d.h. parallel zur Y-Achse und schwenkt in eine gerade Linie, die unter einem Winkel zur X- und Y-Achse steht. Die programmierte Strecke, die im allgemeinen der Fuge folgt, ist mit 85 bezeichnet, wobei der "shift point" - Verschiebepunkt/Umschaltepunkt - mit SP bezeichnet ist.

Wenn der vertikale Teil der Strecke 85 durchlaufen wird, funktioniert die Vorrichtung wie bei Figur 5 beschrieben. Wenn jedoch "shift point" SP erreicht ist, wird durch die programmierte Steuerung 17 das Rotor-Getriebe 31 gedreht, so daß die Zerleger-Rotor-Wicklung 76 in bezug auf den Winkel neu eingestellt wird, bezogen auf Stator-Wicklung 77 und 78. Die Spitzen 22 und 26 und die C-Achse befinden sich nun in einer Linie unter einem Winkel, der dem unteren Teil der programmierten Strecke 85 entspricht. Das Programm treibt nun Brücke 6 und Wagen 7 zusammen an.

Wenn die Sondenspitze 26 eine Abweichung in der mit 85a in Figur 7 bezeichneten abgewinkelten Fuge feststellt, dann erfolgt die Bewegung wieder senkrecht zur Strecke 85 und bringt dadurch die Brückenschaltung 69 aus dem Gleichgewicht, so daß Verstärker 71 der Drehmelder-Rotor-Wicklung 76 ein Spannungs-Signal zuführt. Da jedoch die Wicklung 76 im Winkel zu den Stator-Wicklungen 77 und 78 positioniert ist, wird eine Spannung induziert, so daß der $Y_d$-Schlitten-Motor 60 und der $X_d$-Motor 59 proportional zur relativen Wicklungs-Winkelbildung wirkt, so daß der Rotor 29 mit seinen Teilen einschließlich Schweißkopf 21, je nach dem Ausmaß der Abweichung in bezug auf die $Y_d$- und X-Achsen bewegt wird.

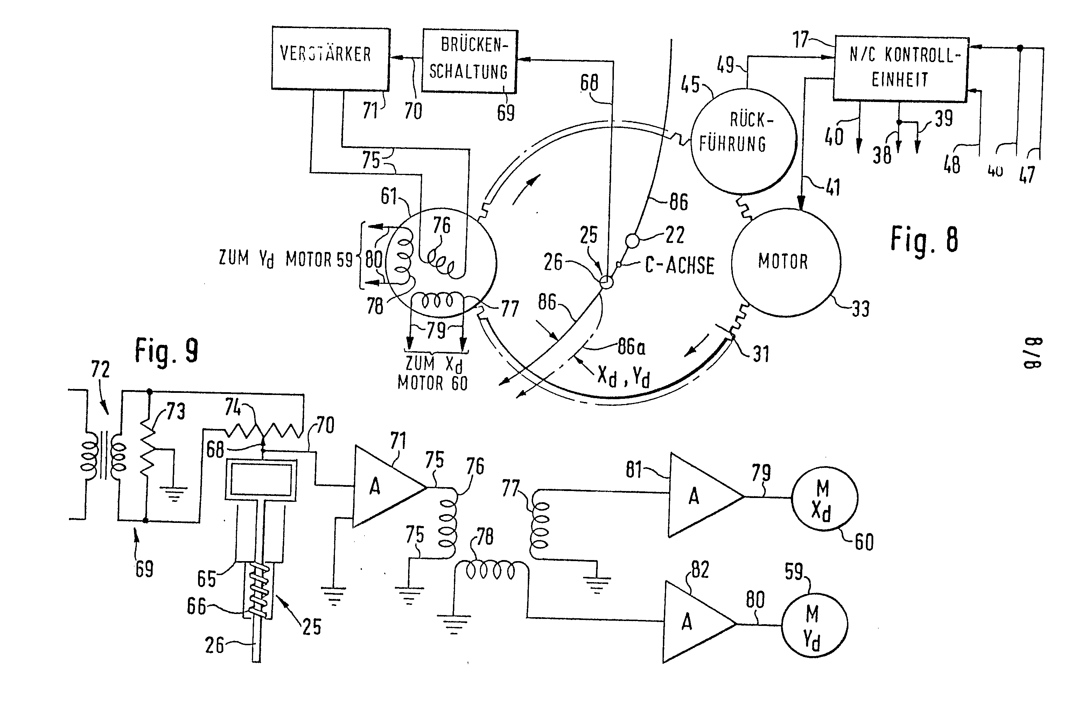

Wenn eine gekrümmte Fuge zu schweißen ist, wird die programmierte Strecke eine Form annehmen, die mit 86 in Fig.8 bezeichnet ist. In Anbetracht der ständigen Veränderung des Richtungsverlaufs der Strecke 86 und weil die Spitzen 22 und 26 sowie die C-Achse in gerader Linie zu halten sind, die so gut wie möglich der Strecke 86 folgt, ist der Rotor-Motor 33 so programmiert, daß eine kontinuierliche Drehung des Getriebes 31 und somit der Welle 62 erfolgt. Dadurch entsteht eine sich ständig ändernde Winkelbeziehung zwischen Zerleger-Rotor-Wicklung 76 und den Stator-Wicklungen 77 und 78. Eine Fugenabweichung 86a, die durch eine sich senkrecht zu einer Tangente zur Krümmung bewegende Sondenspitze 26 festgestellt wird, bewirkt einen sich ständig ändernden Antrieb des $Y_d$-Motors 60 und des $X_d$-Motors 59.

Da das Rotor-Getriebe 31 und die Welle 62 so verbunden sind, daß sie sich in einem Verhältnis von 1 : 1 drehen und in Anbetracht der üblichen drehbaren elektrischen Kontakte (nicht dargestellt) zwischen den drehbaren Teilen, ist eine vollständige 360°-Korrektur möglich. Die tatsächliche Genauigkeit der Korrektur bei nicht linearen Strecken ist etwas beschränkt. Diese Beschränkung wird dadurch verursacht, daß die Schweißkopfspitze 22 und die Sonden-Spitze 26 nicht direkt in der C-Achse der Rotor-Umdrehung angeordnet sind. Stattdessen sind sie etwas von der C-Achse und auch voneinander entfernt angeordnet, weil die Sonde dem Schweißkopf vorausläuft. Der Abstand zwischen den Spitzen 22 und 26 braucht nur klein zu sein, z.B. 1 inch. Bei großen Schweißteilen werden die meisten Kurven einen Mindest-Radius von ca. 3 inch haben. Die Differenz zwischen der Krümmungs- und der Tangential-Linie zwischen den Spitzen 22 und 26 wird daher im allgemeinen "de minimus" sein.

Eine weitere Begrenzung infolge des Abstands zwischen den Spitzen 22 und 26 ergibt sich bei Versuchen, 90°-Ecken zu umfahren. Dabei kann es erforderlich sein, das Maschinen-Programm zu stoppen und die Ecke manuell zu umfahren oder die Maschine für eine Schleife mit abgeschaltetem Lichtbogen von 270° zu programmieren. In der beschriebenen Darstellung wird ein flaches Werkstück auf einer Ebene geschweißt. Die Fläche enthält nur 2 Achsen, die X- und Y-Achse. In einigen Fällen mag es erwünscht sein, die Erfindung zum Schweißen eines Werkstücks anzuwenden, wobei die Schweißfuge auch eineVertikal- oder eine Z-Komponente enthält. Dies kann leicht dem Steuer-Programm hinzugefügt werden. Ferner kann die Schlittenanordnung 50 mit einer dritten Schlittenvorrichtung vorgesehen werden, die die $Z_d$-Achse darstellt. Zerleger 61 kann eine dritte Stator-Wicklung aufweisen, in Verbindung mit einem $Z_d$-Achsen-Motor und die Sonde 25 kann derart ausgelegt werden, daß vertikale Abweichungen und horizontale Abweichungen festzustellen sind.

Die dargestellten und beschriebenen Achsen, ihre Bestimmung und ihre Positionen sind nur zur Veranschaulichung bestimmt. Andere Systeme mehrerer Achsen können eingesetzt werden, ohne den Rahmen der Erfindung zu verlassen.

Die Erfindung kann bei Schweißmaschinen mit verschiedenen Lichtbogen-Systemen wie MIG, TIG oder "getauchte Lichtbogen" eingesetzt werden.

Bei einer Maschine der dargestellten Type kann ferner das spezielle Schweißsystem durch Änderung des Schweißeinsatzes und der Zuführungsvorrichtung umgestellt werden, ohne das grundlegende Abweichungs-Korrektur-System zu ändern.

Die Erfindung ermöglicht den Einsatz eines Einzel-Programms zum Schweißen einer Vielzahl von gleichen Werkstücken und das Feststellen der dimensionalen Einzigartigkeit jedes Teiles durch ständiges Aufspüren der Abweichungen vom Programm und durch ständige Einstellung bzw. Korrektur derartiger Abweichungen, und zwar ohne das Programm ändern zu müssen.

Die Abweichungen brauchen in keinen Programm-Speicher eingegeben zu werden, da die Korrekturvorrichtung während des Schweißens und unabhängig vom Programm auf jedes einzelne Werkstück separat reagiert. Die Vorrichtung gleicht automatisch die Differenz zwischen der programmierten Strecke und der gewünschten effektiven Strecke aus.

Wenn gewünscht wird, Teile unterschiedlicher Form zu schweißen, braucht nur die Programm-Steuerung geändert zu werden. Abtast- und Korrektur-Vorrichtung können bleiben. Verschiedene Arten, die Erfindung zu realisieren, liegen innerhalb des Rahmens der folgenden Ansprüche, wobei besonders auf die Hauptmerkmale hingewiesen wird, die als Erfindung angesehen werden.

Ffm., 20. 3. 1980
Be/Ack
TMG 1225

- 1 -

Patentansprüche:

Schweißmaschine zum Verbinden einer Vielzahl von Metall-Teilen entlang einer Fuge, gekennzeichnet durch

a) einen Maschinen-Support (4,5,6) zur Bewegung der Maschine in einer Y-Achse,

b) einen Maschinen-Wagen (7) am Support (4, 5, 6) zur Bewegung der Maschine in einer X-Achse,

c) einen Rotor (29) an dem Wagen (7), der um eine C-Achse drehbar ist, die im allgemeinen senkrecht zur X- und Y-Achse positioniert ist,

d) einen Schweißkopf (21) an dem Wagen (7), um eine Schweißung in der Fuge (37) durchzuführen,

d) einen Sensor (23) an dem Wagen (7), um der Kontur der Fuge (37) vor dem Schweißkopf (21) zu folgen, wobei

f) der Schweißkopf (21) und der Sensor (22) separat voneinander auf einer geraden Linie um die C-Achse drehbar angeordnet sind,

g) erste und zweite Antriebe (8, 9, 14 bzw. 33) zum selektiven Antrieb des Supports (4, 5, 6) und des Wagens (7) in den X- und Y-Achsen und um den Rotor (29) um die C-Achse zu drehen,

h) eine Eingabesteuereinheit (17) für den ersten und zweiten Antrieb um zu bewirken, daß der Sensor und der Schweißkopf eine Programm-Strecke durchlaufen, die im allgemeinen derjenigen der Fuge (37) entspricht,

 i) einen Programm-Übersteuerungs-Teil (50-80), der mit dem Rotor (29) verbunden ist und auf vom Sensor (22) abgetastete Abweichung in der Fuge senkrecht zur programmierten Strecke reagiert, um zu veranlassen, daß sich der Rotor und der Schweißkopf (21) von der programmierten Strecke zur korrigierten Strecke, welche der effektiven, von der Fuge gebildeten Strecke entspricht, bewegt.

2. Schweißmaschine nach Anspruch 1, gekennzeichnet durch einen Programm-Übersteuerungs-Teil (50-80), welcher unabhängig von der Eingabesteuereinheit und während die Fuge vom Sensor abgetastet wird, eine kontinuierliche Korrektureinstellung des Schweißkopfes (21) bewirkt.

3. Schweißmaschine nach Anspruch 1, gekennzeichnet durch eine Programm-Übersteuerung (50-80) die folgende Merkmale aufweist:

a) eine Schlittenvorrichtung (50-58) an dem Wagen (7) mit einer Vielzahl von Schlitten, die in Richtung der Abweichungs-Achsen ($X_d$, $Y_d$) beweglich sind.

b) einen dritten Antriebsteil (59-60), um die Schlittenvorrichtung (50-58) in den Abweichungs-Achsen ($X_d$,$Y_d$) zu bewegen, wobei

c) die Schlittenvorrichtung (50-58) mit dem Rotor (29) verbunden ist, so daß die Betätigung des dritten Antriebsteils (59-62) bewirkt, daß der Rotor (29) sich in den Abweichungsachsen ($X_d$, $Y_d$) bewegt.

4. Schweißmaschine nach Anspruch 3, gekennzeichnet durch eine Programm-Übersteuerung (50-80) mit einem

a) elektromechanischen Teil (61), der eingangsseitig

- 3 -

an den Sensor (25) und ausgangsseitig an den dritten Antriebsteil (59, 60) angeschlossen ist und der

b) und der mechanisch verstellbar ist in Abhängigkeit der von der zweiten Antriebsvorrichtung (33) bestimmten Position des Rotors (29).

5. Schweißmaschine nach Anspruch 4, dadurch gekennzeichnet, daß der elektromechanische Teil einen Sinus-Cosinus-Zerleger (61) mit drehbarer Welle (62) aufweist, die an den Rotor (29) angeschlossen ist und der eine Rotorwicklung (76) und Stator-Wicklung (77, 78) aufweist.

6. Schweißmaschine nach einem der Ansprüche 1 bis 5, dadurch gekennzeichnet, daß

a) die Schlittenvorrichtung (50-58) am Wagen (7) montiert ist,

b) der Rotor (29) an der untersten Schlittenvorrichtung (55-58) angebracht ist und

c) Schweißkopf (2) und Sensor (25) an der Unterseite des Rotors (29) befestigt sind.

FFm., den 20. März 1980
Be/Ack
TMG 1225

Fig. 1

Fig. 2

# Fig. 3

Fig. 4

Fig. 5

Fig. 6

VERSTÄRKER

BRÜCKEN-SCHALTUNG

N/C KONTROLL-EINHEIT

RÜCK-FÜHRUNG

MOTOR

ZUM $Y_d$ MOTOR 59

ZUM $X_d$ MOTOR 60

C-ACHSE

$X_d$ $Y_d$

Fig. 7

Fig. 8

Fig. 9

**Europäisches Patentamt**

**EUROPÄISCHER RECHERCHENBERICHT**

Nummer der Anmeldung

EP 80 10 1622

## EINSCHLÄGIGE DOKUMENTE

| Kategorie | Kennzeichnung des Dokuments mit Angabe soweit erforderlich der maßgeblichen Teile | betrifft Anspruch |
|---|---|---|
| | US - A - 3 216 641 (MOTOMATION) <br> * Insgesamt * <br><br> -- | 1 |
| | US - A - 3 150 624 (MOTOMATION) <br> * Spalte 4, Zeilen 25-71 * <br><br> -- | 1 |
| | US - A - 4 008 384 (GLITSCH) <br> * Zusammenfassung * <br> & NL - A - 74 11899 <br><br> -- | 1 |
| | DE - A - 2 735 632 (ASEA) <br> * Seiten 1-6; Figur 2; Seite 21, Zeilen 5-9, 17-20 * <br><br> -- | 1 |
| | DE - B - 2 426 697 (LICENTIA) <br> * Spalte 1, Zeilen 4-40 * <br><br> -- | 1 |
| | DE - B - 2 739 302 (MESSER) <br> * Spalte 2, Zeilen 58-65 * <br><br> -- | 5 |
| | AUTOMATIC WELDING, Band 29, Nr. 12, Dezember 1976, Seiten 26,27 Cambridge, G.B. <br> G.A. SPYNU et al.: "A digital control system with tracking programming for guiding electrodes along joints" <br> * Seite 26, linke Spalte * <br><br> --      ./. | 1 |

**KLASSIFIKATION DER ANMELDUNG (Int.Cl. 3)**

B 23 K 9/02

**RECHERCHIERTE SACHGEBIETE (Int. Cl. 3)**

B 23 K 9/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-06-1980 | HOORNAERT |

EPA form 1503.1 06.78

0017167

Europäisches Patentamt

**EUROPÄISCHER RECHERCHENBERICHT**

Nummer der Anmeldung

EP 80 10 1622

-2-

| | EINSCHLÄGIGE DOKUMENTE | | KLASSIFIKATION DE⁻ ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | SCHWEISSEN UND SCHNEIDEN, Band 27, 1975, Heft 10, Seiten 414-415 Düsseldorf, DE. "Positionscomputer, ein neuartiges Gerät zur Brennerpositionierung für alle Lichtbogenschweissver-fahren" <br><br> * Seite 414 * <br><br> ---- | 1 | |
| | | | **RECHERCHIERTE SACHGEBIETE (Int. Cl. ³)** |